# EUROPÄISCHE PATENTSCHRIFT

(11) **EP 0 655 592 B1**
(45) Veröffentlichungstag und Bekanntmachung des Hinweises auf die Patenterteilung: **08.07.1998**
(21) Anmeldenummer: 94116360.2
(22) Anmeldetag: 15.10.1994
(51) Int. Cl.: F25D 17/02, F25D 15/00, B64D 11/04

(54) **Anordnung zur Kühlung von Lebensmitteln, insbesondere in einem Flugzeug**
Apparatus for cooling of foodstuffs, especially in an aircraft
Dispositif pour le refroidissement des produits alimentations, en particulier dans un avion

(30) Priorität: 26.11.1993 DE 4340316
(43) Veröffentlichungstag der Anmeldung: 31.05.1995
(73) Patentinhaber: Daimler-Benz Aerospace Airbus Gesellschaft mit beschränkter Haftung, 21129 Hamburg (DE)
(72) Erfinder: Kull, Harald, D-23628 Krummesse (DE); Scherer, Thomas, Dr., D-22587 Hamburg (DE); Seidler, Siegfried, D-27386 Westerwalsede (DE)
(74) Vertreter: Hansmann, Dierk, Dipl.-Ing.

(56) Entgegenhaltungen:
- FR-A- 2 652 885
- FR-A- 2 689 222
- TECHNISCHE RUNDSCHAU, Bd.63, Nr.51, 3. Dezember 1971, BERN CH Seite 31 'Flugtechnik: Bordküchen für die Boeing 747'

## Beschreibung

Die Erfindung betrifft eine Anordnung zur Kühlung von Lebensmitteln, insbesondere in einem Flugzeug gemäß dem Oberbegriff von Anspruch 1.

Zur Versorgung der Passagiere im Luftverkehr werden Speisen und Getränke angeboten, die in Transportbehältern, sogenannten Trolleys, kühl gelagert und in den meisten Fällen daraus serviert werden. Die Transportbehälter haben unabhängig vom Flugzeugtyp vorgegebene Abmessungen, da weltweit diese Behälter üblicherweise bei den Fluggesellschaften eingesetzt werden. Sie werden außerhalb des Flugzeuges fertig bestückt und vorgekühlt und müssen nach der Verladung in das Flugzeug in der Bordküche abgestellt und mit entsprechenden Einrichtungen weitergekühlt werden.

Bisher sind für die Kühlung von Lebensmitteln an Bord eines Flugzeuges Mittel bekannt, wie Trockeneis - CO₂ in fester Form - oder Kühlluft, die entweder direkt durch den Transportbehälter oder um den Transportbehälter herum geleitet wird.

Für die Kühlung mittels Trockeneis muß ein vom Nutzraum des Transportbehälters abgeteilter oberer Raum zur Aufnahme des aus zu Platten gepreßten CO₂-Schnee vorgesehen werden. Das durch Sublimation entstehende kalte CO₂-Gas sinkt über die Lebensmittel nach unten und bewirkt dabei die Kühlung derselben. Infolge der Sublimation bei diesem Prinzip ist die Maximalkühlzeit begrenzt und eine regelbare Kühlleistung ist ebenfalls nicht zu realisieren.

Aus der DE-A-41 05 034 ist bekannt, daß gekühlte Luft in den vom Nutzraum abgeteilten Raum geführt wird und dort frei liegende Teile der Kühlschlangen eines Rohrsystems kühlt, die hauptsächlich in den Wänden des Transportbehälters liegen. Ein solcher Kühlluftkreislauf wird gespeist entweder von einer Kompressionskaltdampfmaschine (Air-Chiller) oder einem Wärmetauscher, der an der Außenhaut der Flugzeugzelle temperiert wird.

Diese Lösungen arbeiten mit Luft als Wärmeträger, wobei erhebliche Undichtigkeiten auftreten und Leckageverluste nicht zu vermeiden sind. Damit treten hohe Energieverluste auf und es ist nur ein niedriger Wirkungsgrad zu erreichen.
Darüber hinaus ist der Nutzraum im Transportbehälter reduziert, was für die Passagierversorgung einen erheblichen Nachteil mit sich bringt, da sich bei einem geringen Nutzraum je Transportbehälter die Anzahl der benötigten Behälter erhöht und damit im Flugzeug einen erheblichen Platz-und Gewichtsbedarf mit sich bringt.

Die den nächstkommenden Stand der Technik bildende FR-A-2689222 zeigt, daß einem Transportbehälter eine Wärmetauscheinrichtung zugeordnet ist, die Wärmetauscheinrichtung mit einem Kühlaggregat verbunden ist und im Transportbehälter in Wärmeträgerleitungen ein Sekundärkreislauf zirkuliert, der an der Wärmetauscheinrichtung Kühlexergie aufnimmt und die Kühlexergie an den Transportbehälter wieder abgibt. Ein Teil des möglichen Nutzraumes des Transportbehälters wird hierbei für mehrere, innen liegende Wärmeübertragerflächen benötigt, was ebenfalls den Nutzraum einschränkt. Auch sind Energieverluste nicht zu vermeiden, da Luft als Übertragungsmedium zwischen den Wärmeübertragerflächen zur Anwendung kommt.

Demgemäß liegt der Erfindung die Aufgabe zugrunde, eine gattungsgemäße Anordnung derart auszubilden, daß Energieverluste minimiert werden und damit ein erheblich verbesserter Wirkungsgrad erreicht wird und ein maximal verfügbarer Nutzraum in dem in den Abmessungen festgelegtem Transportbehälter erreicht wird.

Diese Aufgabe ist durch die Merkmale von Anspruch 1 gelöst.

Vorteilhaft ist, daß ein erheblich verbesserter Wirkungsgrad im Kühlkreislauf dadurch erreicht wird, daß Leckagen und Undichtigkeiten innerhalb der Anordnung auf ein Minimum reduziert sind.

Vorteilhaft ist weiterhin, daß keine Nutzraumabgabe, beispielsweise zur Aufnahme von Trockeneis, notwendig ist. So kann mit den Behältern in den üblichen Abmessungen ein maximaler Nutzraum zur Verfügung gestellt werden.

Weiterbildungen und zweckmäßige Ausgestaltungen sind in den Unteransprüchen 2 bis 15 angegeben.

In einer vorteilhaften Ausgestaltung ist der jeweiligen Wärmetauscheinrichtung eine Regeleinrichtung zugeordnet. So ist zu jeder Zeit eine dem Bedarf angepaßte Kältezuführung in Abhängigkeit von der benötigten Kälteleistung in den Transportbehältern gewährleistet.

Um eine den Platzverhältnissen im Flugzeug angepaßte und energetisch optimale Anordnung der Transportbehälter in den Bordküchen zu erreichen, ist vorzugsweise die Wärmetauscheinrichtung oberhalb des Transportbehälters angeordnet.

Da innerhalb einer Bordküche mehrere Transportbehälter nebeneinander stehen, befindet sich die jeweilige Kontaktfläche zur Wärmeübertragung vorzugsweise unterhalb der Wärmetauscheinrichtung und vorzugsweise an der oberen Deckplatte des Transportbehälters.

Um eine problemlose Entnahme der Transportbehälter aus der Bordküche zu ermöglichen, sind die Kontaktflächen mittels einer Hub- und Senkvorrichtung mechanisch trennbar gestaltet.

In einer möglichen Ausgestaltung kann das Kühlaggregat im Primärkreislauf als eine Kompressionskaltdampfmaschine ausgebildet sein, wobei sie über eine als Kältemittelflüssigkeitsleitung ausgebildete Zuführleitung und bedarfsweise eine Pumpe mit zumindest einer als Verdampfer ausgebildeten Wärmetauscheinrichtung verbunden ist und der Verdampfer über eine als Kältemitteldampfleitung ausgebildete Rückführleitung mit der Kompressionskaltdampfmaschine verbunden ist.

In einer alternativen Ausgestaltung ist das Kühlaggregat im Primärkreislauf als eine Sorptionseinrichtung ausgebildet, wobei sie über eine als Kältemittelflüssigkeitsleitung ausgebildete Zuführleitung und bedarfsweise eine Pumpe mit zumindest einer als Verdampfer ausgebildeten Wärmetauscheinrichtung verbunden ist und der Verdampfer über eine als Kältemitteldampfleitung ausgebildete Rückführleitung mit der Sorptionseinrichtung verbunden ist.

Eine Ausgestaltung der Sorptionseinrichtung kann im wesentlichen so aussehen, daß sie aus mindestens zwei periodisch arbeitenden, parallel geschalteten Kocher-Adsorbern, die in einem quasikontinuierlichen Prozeß das Kältemittel (Wasser) adsorbieren und desorbieren, einer bedarfsweise zuschaltbaren Vakuumpumpe, einem Kondensator und einem Kältemittelsammelbehälter aufgebaut ist. Somit ist eine nahezu kontinuierliche Kälteerzeugung gewährleistet. Als Sorptionsmittel ist Zeolith und als Kältemittel ist Wasser verwendbar, was insbesondere im Flugzeug vorteilhaft einsetzbar ist, da es ökologisch und physiologisch unbedenklich ist.

Eine weitere Ausgestaltung der Sorptionseinrichtung kann im wesentlichen so aussehen, daß sie im wesentlichen aus einem Kocher und einem Absorber, die in Reihe geschaltet sind und die in einem kontinuierlichen Prozeß das Kältemittel absorbieren und desorbieren, einer bedarfsweise zuschaltbaren Pumpe, einem Kondensator und bedarfsweise einem Kältemittelsammelbehälter aufgebaut ist.

Um eine geregelte Kältemittelzuführung am jeweiligen Verdampfer mit der Regeleinheit zu erreichen, besteht sie im wesentlichen aus einem Einspritzmengenregler und einem Abströmmengenregler, die jeweils mit einem Sollwertgeber verbunden sind und wobei der Einspritzmengenregler über mindestens einen Meßwandler mit einem Positionsschalter zum Erfassen der Position des Transportbehälters und wahlweise mit mindestens einem Temperatursensor zum Erfassen der Temperatur des Kühlgutes innerhalb des Transportbehälters und/oder mit einem Füllstandsgeber im Verdampfer verbunden ist und der Abströmmengenregler über mindestens einen Meßwandler mit dem Positionsschalter und wahlweise mit mindestens einem Temperatursensor im Transportbehälter und/oder mit einem Drucksensor im Verdampfer verbunden ist.

Eine alternative Ausgestaltung der Regeleinheit an der jeweiligen Wärmetauscheinrichtung im wesentlichen aus einem Durchflußmengenregler besteht, der jeweils mit einem Sollwertgeber verbunden ist und wobei der Durchflußmengenregler über Meßwandler mit einem Positionsschalter zum Erfassen der Position des Transportbehälters und wahlweise mit mindestens einem Temperatursensor zum Erfassen der Temperatur des Kühlgutes innerhalb des Transportbehälters und/oder mit einem Temperatursensor an der Wärmetauscheinrichtung verbunden ist.

In einer bevorzugten Ausgestaltung ist die Regeleinheit als Mikroprozessor ausgebildet.

In einer weiteren Ausgestaltung sind die Regeleinheiten an den jeweiligen Wärmetauscheinrichtungen in einem zentralen Prozeßrechner zusammengefaßt.

Um eine variable Kälteleistung entsprechend der jeweils geforderten Bedingungen zu ermöglichen, ist in einer möglichen Ausgestaltung der Sollwertgeber in Abhängigkeit von der Kabinentemperatur programmierbar ausgeführt.

Die Erfindung wird nachstehend beschrieben und anhand der Figuren 1 - 5 näher erläutert.

Es zeigen:
- Fig. 1: eine Übersichtsdarstellung einer Anordnung zur Kühlung von Lebensmitteln in einem Flugzeug,
- Fig. 2: eine schematische Darstellung der Anordnung zur Kühlung von Lebensmitteln,
- Fig. 3: einen Transportbehälter,
- Fig. 4: die Anordnung zur Kühlung von Lebensmitteln mit einer speziellen Ausgestaltung des Kühlaggregates als eine Sorptionseinrichtung und
- Fig. 5: die Einzelheit IV aus Fig. 4, die eine Regeleinheit zeigt.

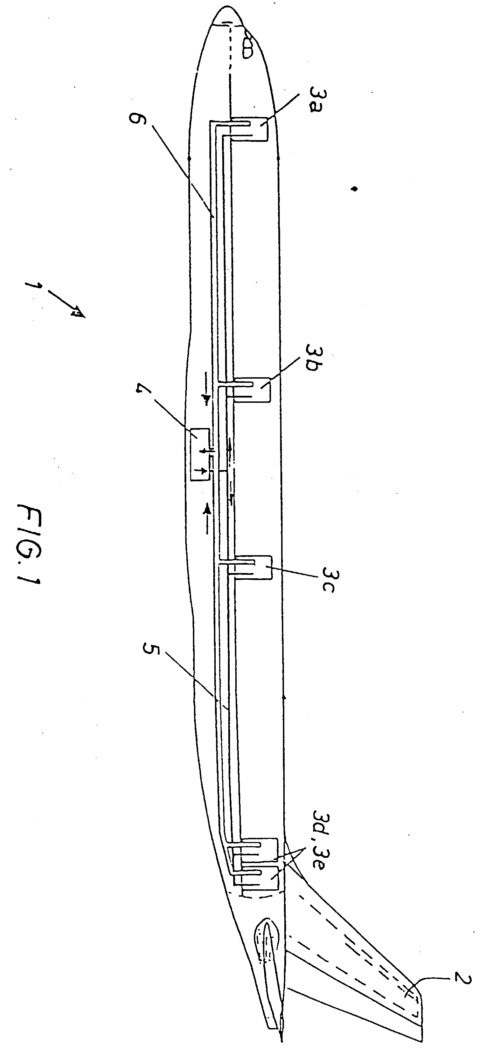

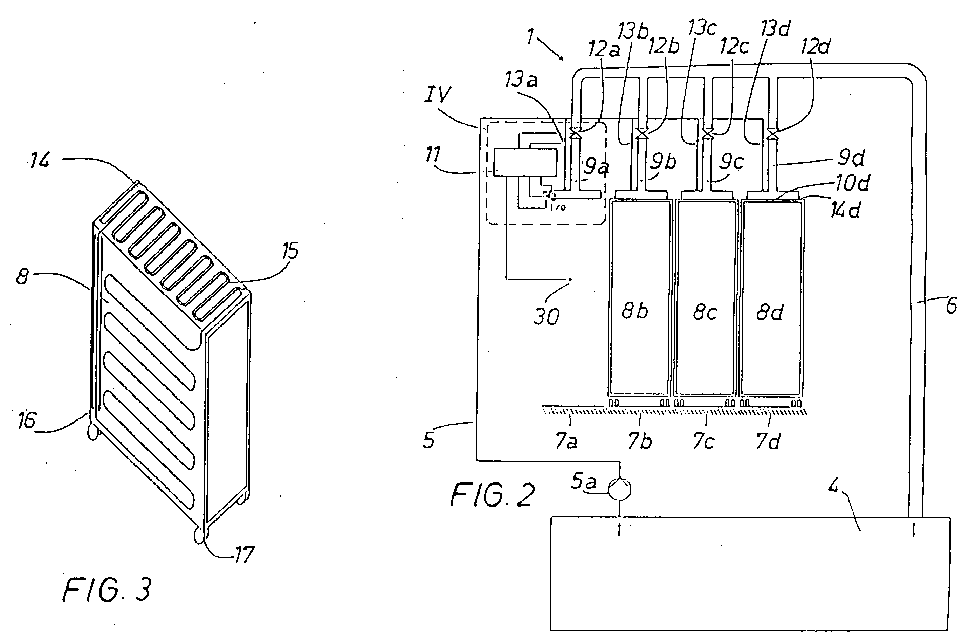

Die Fig. 1 zeigt eine Anordnung zur Kühlung von Lebensmitteln 1 in einem Flugzeug 2 in einer Übersichtsdarstellung. Die Lebensmittel sind in üblicherweise bekannten Transportbehältern gelagert, die innerhalb des Flugzeuges vorgegebene Stellplätze, vorzugsweise in innerhalb des Kabinenraumes befindlichen Bordküchen 3a bis 3e einnehmen.
Ausgehend von einem zentralen Kühlaggregat 4 wird über ein zentrales Leitungssystem mit einer Zuführ- und einer Rückführleitung 5 und 6, die das Kühlmedium, beispielsweise ein Kältemittel oder ein Wärmeträger, zum jeweiligen Verbraucher zu- und wieder abführen, jede der Bordküchen 3a bis 3e mit Kühlexergie versorgt. Als Kühlaggregat 4 ist hier und in der nachfolgenden Beschreibung jede Einrichtung zur Erzeugung von Kälte bezeichnet. An den Leitungsenden der jeweiligen Zuführ- und Rückführleitung 5 und 6 innerhalb der Bordküchen 3a bis 3e sind Wärmetauscheinrichtungen, beispielsweise Verdampfer, angeschlossen, an denen ein Wärmeträger eines Sekundärkreislaufes Wärme abgeben kann und sich abkühlt. Dieser Wärmeträger überträgt die aufgenommene Kühlexergie auf die in den Transportbehältern gelagerten Lebensmittel. In der Beschreibung zur Fig. 2 und 3 wird auf eine mögliche Ausführung des Sekundärkreislaufes näher eingegangen.
In einer weiteren, nicht in der Zeichnung dargestellten Ausführung der Anordnung 1 kann unter Ausnutzung des üblicherweise vorhandenen Sekundärkreislaufes mit dem Wärmeträger Luft in bekannten Bordküchen anstelle einer Kompressionskaltdampfmaschine eine Wärmetauscheinrichtung, vorzugsweise ein Verdampfer plaziert werden. So können vorteilhaft schon vorhandene Sekundärkreisläufe in den bestehenden Bordküchen ohne aufwendige Umbauten auf eine zentrale, vorzugsweise ohne FCKW arbeitende Kälteversorgung umgestellt werden. Beispielsweise ist dies mit einem als Sorptionseinrichtung ausgebildetem Kühlaggregat möglich.

Mit dieser Anordnung ist es möglich, mit nur einem zentralen Kühlaggregat 4 die gesamte in einem Flugzeug benötigte Kühlleistung zur Kühlung von Lebensmitteln in den Bordküchen 3a bis 3e zur Verfügung zu stellen.

Eine schematische Darstellung der Anordnung zur Kühlung von Lebensmitteln 1, anhand der die erfindungsgemäße Lösung in einer möglichen Ausführung beschrieben wird, ist in Fig. 2 ersichtlich.
Der Primärkreislauf zur Kühlung besteht im wesentlichen aus dem Kühlaggregat 4, den Verdampfern 9a bis 9d, der als eine Kältemittelflüssigkeitsleitung ausgebildeten Zuführleitung 5, in der das verflüssigte Kältemittel bedarfsweise mit einer Pumpe 5a zum jeweiligen Verdampfer 9a bis 9d transportiert wird, und der als eine Kältemitteldampfleitung ausgebildeten Rückführleitung 6, in der das verdampfte Kältemittel wieder zurück zum Kühlaggregat 4 geleitet wird. An Stellplätzen 7a bis 7d nehmen Transportbehälter 8a bis 8d ihre vorgegebenen Plätze ein. Diese Stellplätze befinden sich jeweils innerhalb einer Bordküche 3, wie schon in der Beschreibung zur Fig. 1 erläutert.
Erfindungsgemäß sind je einem Stellplatz 7a bis 7d der Transportbehälter 8a bis 8d ein Verdampfer 9a bis 9d zugeordnet. Der Verdampfer 9 ist vorzugsweise oberhalb des Transportbehälters 8 in der Weise angeordnet, daß eine Kontaktfläche 10 des Verdampfers 9 wärmeleitend mit einer Kontaktfläche 14' einer oberen Deckplatte 14 des darunter befindlichen Transportbehälters 9 verbunden ist. Die Übertragung der Kälte vom Verdampfer 9 zum Transportbehälter 8 erfolgt nach dem Prinzip einer Kaskadenschaltung.
Der für eine gute Wärmeleitung erforderliche Anpreßdruck läßt sich durch eine nicht dargestellte Hub- bzw. Senkvorrichtung realisieren. Die automatisch oder manuell bedienbare Hub- bzw. Senkvorrichtung hebt den Verdampfer 9 mit der Kontaktfläche 10 soweit an, daß der Transportbehälter 8 aus der Bordküche 3 entnommen werden kann und bleibt in dieser Stellung bis ein Transportbehälter 8 wieder auf den entsprechenden Stellplatz 7 gestellt wird. Dann senkt die Hub- bzw. Senkvorrichtung die Kontaktfläche 10 des Verdampfers 9 soweit, daß eine gute Wärmeleitung zur oberen Deckplatte 14 gewährleistet ist.

In Fig. 3 ist der Transportbehälter 8 gezeigt, der mit Rollen 17 ausgestattet ist. Zur Weiterleitung der Kälte im sogenannten Sekundärkreislauf befinden sich in den Seitenwänden und in der oberen Deckplatte 14 Wärmeträgerleitungen 15, vorzugsweise als Kühlschlangen ausgebildet, mit einer unbrennbaren und ungiftigen Wärmeträgerflüssigkeit. Kühlt sich der Verdampfer 9 nun ab, wird Wärme aus der auf einem höheren Temperaturniveau befindlichen Wärmeträgerflüssigkeit in den Kühlschlangen 15 des Transportbehälters 8 über seine Kontaktfläche 14' an der oberen Deckplatte 14 auf die Kontaktfläche 10 des Verdampfers 9 übertragen. Durch die kontinuierliche Verdampfung des Kältemittels im Verdampfer 9 bleibt das thermische Gefälle zwischen Verdampfer 9 und oberer Deckplatte 14 erhalten. Die abgekühlte Wärmeträgerflüssigkeit strömt nach dem Thermosyphonprinzip in einem isolierten Fallrohr 16 in den unteren Bereich des Transportbehälters 8. Die Flüssigkeit erwärmt sich in den Kühlschlangen 15 der Seitenwände und steigt aufgrund der geringeren Dichte nach oben und gibt die aufgenommene Wärme an den Verdampfer 9 ab. Danach beginnt der Kreislauf erneut.

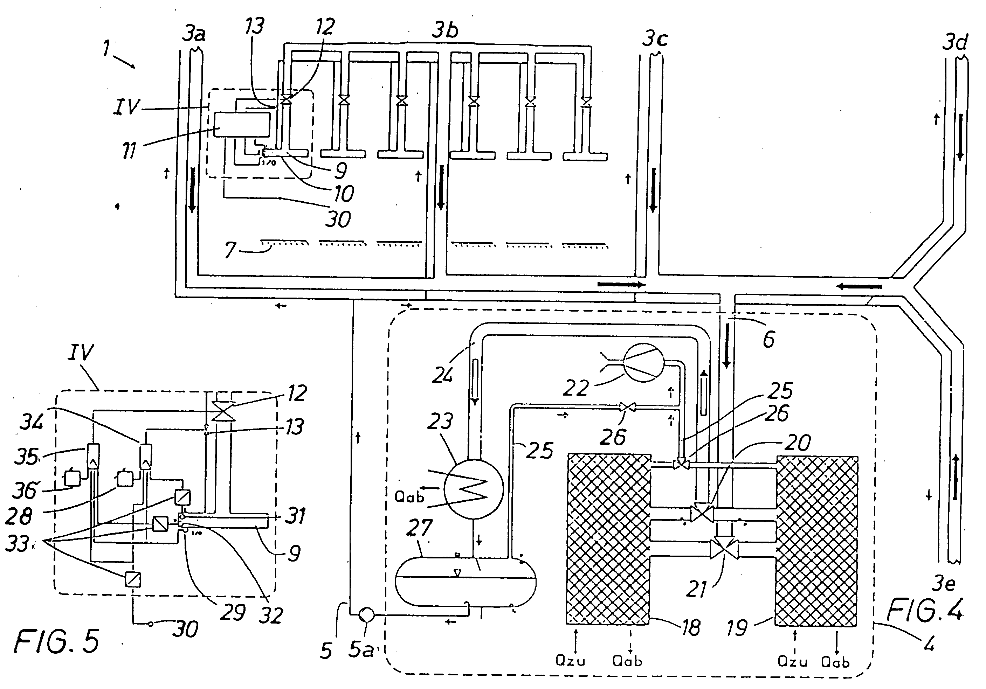

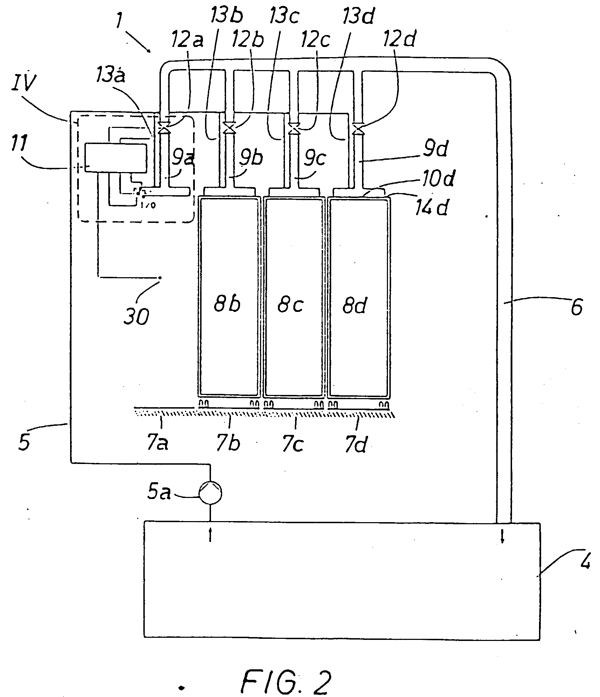

Aus Fig. 2 ist zu entnehmen, daß entsprechend der benötigten Kälteleistung im jeweiligen Transportbehälter 8 am Verdampfer 9 über ein Abströmventil 12 und ein Einspritzventil 13 die Zu- und Abfuhr der Kältemittelmenge regelbar ist. Mittels einer Regeleinheit 11 die an jedem Verdampfer 9 angeordnet ist, kann die optimale Kälteleistung geregelt werden, was natürlich zur Erhöhung des Wirkungsgrades der Anordnung beiträgt.
Die Wirkungsweise der Regeleinheit 11 wird mit der Beschreibung der Fig. 5 erläutert.

In Fig. 4 ist die Anordnung zur Kühlung von Lebensmitteln 1 mit einer speziellen Ausgestaltung des Kühlaggregates 4 als eine Sorptionseinrichtung dargestellt. Die Kältemittelflüssigkeitsleitung 5 verläuft ausgehend von der Sorptionseinrichtung 4 zu den Bordküchen 3a bis 3e und die Kältemitteldampfleitung 6 führt den Kältemitteldampf zurück zur Sorptionseinrichtung 4. Der Anschluß an die Verdampfer 9 der Kältemittelleitungen 5, 6 ist aus Gründen der Übersichtlichkeit nur für die Bordküche 3b genauer dargestellt. Er ist für die anderen Küchen identisch.
Mit dieser Darstellung kann die Wirkungsweise des sogenannten Primärkreislaufes der Anordnung zur Kühlung von Lebenmitteln 1 erläutert werden. Die Sorptionseinrichtung 4 ist im wesentlichen aus zwei periodisch arbeitenden, parallel geschalteten Kocher-Adsorbern 18 und 19 aufgebaut, die in einem quasikontinuierlichen Prozeß das Kältemittel adsorbieren und desorbieren. Als Sorptionsmittel ist vorzugsweise Zeolith und als Kältemittel Wasser zu verwenden. Dieses Arbeitsstoffpaar ist aus ökologischer und physiologischer Sicht unbedenklich und damit ist für Kälteanlagen in einem Flugzeug diese Sorptionstechnik als eine wirkliche Alternative zu Kompressionskaltdampfmaschinen, die als Kältemittel FCKW verwenden, einsetzbar.
Der Primärkreislauf arbeitet im Grobvakuumbereich und so ist eine Vakuumpumpe 22 innerhalb der Sorptionseinrichtung 4 angeordnet. Sie pumpt bei Bedarf eingedrungene Fremdgase über eine Fremdgasleitung 25 und Fremdgasventilen 26 aus einem Sammelbehälter 27 für das desorbierte Kältemittel oder den Kocher-Adsorbern 18, 19 ab.

Der Kühlprozeß läuft wie folgt ab. Das Sorptionsmittel Zeolith in dem Kocher-Adsorber 18 wird durch eine Wärmezufuhr Q_{zu} aufgeheizt, vorzugsweise mit im Flugzeug vorhandener Triebwerkszapfluft. Das im Zeolith gebundene Kältemittel Wasser wird in Form von Wasserdampf ausgetrieben und über ein Ventil zur Desorption 20 in eine Kältemittelleitung für den desorbierten Wasserdampf 24 zu einem Kondensator 23 geleitet, in dem der Wasserdampf verflüssigt wird. Im Sammelbehälter 27 wird das verflüssigte Kältemittel gesammelt. Die Pumpe 5a in der Kältemittelflüssigkeitsleitung 5 stellt einen ausreichenden Kältemitteldruck für das Einspritzventil 13 am jeweiligen Verdampfer 9 zur Verfügung. Mit Hilfe der Regeleinheit 11 wird entsprechend der benötigten Kälteleistung im Transportbehälter 8 die Kältemittelmenge im Verdampfer 9 eingestellt.
Eine genaue Darstellung der Regelung wird in der Beschreibung der Fig. 5 vorgenommen. Durch Verdampfen des Kältemittels im Verdampfer 9 bei niedrigem Druck wird dem Sekundärkreislauf im Transportbehälter 8 Wärme entzogen. Das verdampfte Kältemittel wird über die Kältemitteldampfleitung 6 zurück zur Sorptionseinrichtung 4 gesaugt.
Ist genügend Kältemittel im Kocher-Adsorber 18 ausgetrieben, wird die Wärmezufuhr Q_{zu} eingestellt und das Drei-Wege-Ventil für die Desorption 20 wird auf den Kocher-Adsorber 19 umgestellt, der nun seine Desorptionsphase beginnt. Im Kocher-Adsorber 18 beginnt inzwischen die Adsorptionsphase, in der aus den Verdampfern 9 der Kältemitteldampf über die Kältemitteldampfleitung 6 und einem auf den Kocher-Adsorber 18 umgeschalteten Drei-Wege-Ventil für die Adsorption 21 vom Sorptionsmittel angesaugt und adsorbiert wird. Zur Abführung der Wärme Q_{ab} von den Kocher-Adsorbern 18 bzw. 19 während der Adsorptionsphase und für den Kondensator 23 ist vorzugsweise Kabinenabluft aus dem Passagierraum oder Stauluft nutzbar. Mit der phasenversetzten Umschaltung zwischen den Kocher-Adsorbern 18, 19 ist somit auch nahezu eine kontinuierliche Kälteerzeugung möglich. Eine solche periodisch arbeitende Sorptionseinrichtung arbeitet mit gleichen Verflüssigungs- und Verdampfungsvorgängen wie eine Kompressionskältemaschine. Somit sind für den Kondensator und den Verdampfer sogar die gleichen Bauteile einsetzbar.

In Fig. 5 ist die Einzelheit IV aus Fig. 4 ersichtlich, die die Regeleinheit 11 zur Regelung der benötigten Kältemittelmenge im Verdampfer 9 zeigt. Sie ist mit zwei Regelkreisen realisiert, wobei der erste das Einspritzen des flüssigen Kältemittels in den Verdampfer 9 durch ein Einspritzventil 13 und der zweite das Strömen des Kältemitteldampfes aus dem Verdampfer 9 durch ein Abströmventil 12 regelt.
Die benötigte Kälteleistung ist entsprechend der Soll-Temperatur am jeweiligen Transportbehälter 8 bereitzustellen, die durchschnittlich zwischen 1 und 7°C beträgt und bei unterschiedlichen Kabinentemperaturen erreicht werden muß. Diese Bedingung wird durch den Regelkreis am Abströmventil 12 realisiert. Der Regelkreis am Einspritzventil 13 stellt sicher, daß immer genügend verflüssigtes Kältemittel im Verdampfer 9 zur Verfügung steht.

Die Regelung der Durchflußmenge durch das Einspritzventil 13 erfolgt über einen Einspritzmengenregler 34, der von den Eingangsgrößen Position des Transportbehälters 8, Füllstand im Verdampfer 9 und/oder Temperatur im Transportbehälter 8 bestimmt wird.
Diese Meßgrößen werden über Meßwandler 33 dem Einspritzmengenregler 34 eingegeben, der vorzugsweise mit einem Sollwertgeber 28 gekoppelt ist. Der Sollwertgeber 28 ist vorzugsweise mit einem Prozeßrechner gekoppelt ausgeführt, wobei der Sollwert in Abhängigkeit von einer weiteren Regelgröße, beispielsweise von der Kabinentemperatur, variabel einstellbar ist. In weiteren Ausführungen ist eine manuelle Einstellung des Sollwertes möglich oder es wird von einem vorbestimmten festen Sollwert ausgegangen.
Das Einspritzventil 13 wird geöffnet, wenn
- der jeweilige Transportbehälter 8 an seinem Stellplatz 7 ist und die Kontaktflächen 10 und 14' in Kontakt stehen, was mittels eines Positionschalters 29 erfaßt wird und
- ein vorgegebener, mit einem Füllstandsgeber 31 erfaßbarer Füllstandssollwert im Verdampfer 9 unterschritten ist und/oder
- im Transportbehälter 8 eine von einem Sollwert abweichende Temperatur mittels zumindest eines Temperatursensors 30 erfaßt wurde.

Bei der letzten Bedingung muß berücksichtigt werden, daß aufgrund der Wärmekapazitäten im Transportbehälter 8 eine Zeitverzögerung auftritt bis sich die gewünschte Temperatur innerhalb des Transportbehälters 8 am Kühlgut einstellt. Daher ist für die Regelung des Einspritzventils 13 neben der notwendigen Positionierung des Transportbehälters 8 unterhalb des Verdampfers 9 die direkte Messung der eingespritzten Kühlmittelmenge in den Verdampfer 9 mittels des Füllstandsgebers 31 vorzugsweise anzuwenden.

Die Regelung der Durchflußmenge durch das Abströmventil 12 erfolgt über einen Abströmmengenregler 35, der von den Eingangsgrößen Position des Transportbehälters 8, Druck im Verdampfer 9 und/oder Temperatur im Transportbehälter 8 bestimmt wird.
Diese Meßgrößen werden über Meßwandler 33 dem Abströmmengenregler 35 eingegeben, der vorzugsweise mit einem Sollwertgeber 36 gekoppelt ist. Der Sollwertgeber 36 ist vorzugsweise mit einem Prozeßrechner gekoppelt ausgeführt, wobei der Sollwert in Abhängigkeit von einer weiteren Regelgröße, beispielsweise von der Kabinentemperatur, variabel einstellbar ist. In weiteren Ausführungen ist eine manuelle Einstellung des Sollwertes möglich oder es wird von einem vorbestimmten festen Sollwert ausgegangen.

Das Abströmventil 12 besitzt während des gesamten Kühlprozesses eine Mindestöffnungsposition, um ein Bersten des Verdampfers 9 bei Gefrieren des Kältemittels zu verhindern.
Um überhaupt das Abströmventil 12 zu regeln, muß der jeweilige Transportbehälter 8 an seinem Stellplatz 7 sein und die Kontaktflächen 10 und 14' in Kontakt stehen, was mittels des jeweiligen Positionschalters 29 erfaßt wird.
Der erforderliche Öffnungsgrad des Abströmventils 12 wird geregelt, wenn zumindest eine der folgenden Bedingungen gegeben ist:
- Ein Drucksensor 32 erfaßt im Verdampfer 9 einen vom Sollwert abweichenden Druck.
- Im Transportbehälter 8 ist eine von einem Sollwert abweichende Temperatur aufgetreten, die mittels zumindest eines Temperatursensors 30 erfaßt wurde.

Der Druck im Verdampfer 9 steht dabei in einem funktionellen Zusammenhang mit der Temperatur im Transportbehälter 8. Die Regelung des Abströmventils 12 berücksichtigt deshalb, daß aufgrund der Wärmekapazitäten im Transportbehälter 8 eine Zeitverzögerung auftritt bis sich die gewünschte Temperatur innerhalb des Transportbehälters 8 am Kühlgut einstellt.
Die direkte Messung des Druckes im Verdampfer 9 ist demzufolge vorzugsweise für den Regelkreis einzusetzen. Die Messung der Temperatur ist für die bevorzugte Ausführung nur als Sicherheitsmessung anzusehen.
Die Realisierung der Regelung ist mit entsprechenden Schaltungen und Logiken möglich, vorzugsweise mittels Mikroprozessoren.

In einer anderen Ausführung ist die Regeleinheit 11 jedes vorhandenen Verdampfers 9 nicht mehr direkt am Verdampfer 9 angeordnet, sondern sie sind in einem zentralen Prozeßrechner zusammengefaßt.

In einer weiteren möglichen Ausgestaltung kann der Primärkreislauf durch eine zirkulierende Wärmeträgerflüssigkeit, beispielsweise eine Wasser-Glykol-Mischung, als Kühlmedium realisiert werden. Eine geregelte Kältezufuhr an der jeweiligen Wärmetauscheinrichtung innerhalb der Bordküchen kann dann im wesentlichen mit einem durch ein Durchflußmengenregler regelbares Durchflußmengenventil erreicht werden, der mit einem Sollwertgeber in Verbindung steht. Der Sollwertgeber ist vorzugsweise mit einem Prozeßrechner gekoppelt ausgeführt, wobei der Sollwert in Abhängigkeit von einer weiteren Regelgröße, beispielsweise von der Kabinentemperatur, variabel einstellbar ist.
In weiteren Ausführungen ist eine manuelle Einstellung des Sollwertes möglich oder es wird von einem vorbestimmten festen Sollwert ausgegangen.
Der Durchflußmengenregler regelt die Durchflußmenge am Ventil nur, wenn ein Transportbehälter an seinem Stellplatz ist und entsprechend der Eingangsgrößen Temperatur des Kühlgutes oder wahlweise Temperatur an der Wärmetauscheinrichtung reagiert, die über Temperatursensoren erfaßt werden.

### Bezugszeichenliste

- 1 -: Anordnung zur Kühlung von Lebensmitteln
- 2 -: Flugzeug
- 3a - 3e -: Bordküchen
- 4 -: Kühlaggregat
- 5 -: Zuführleitung (Kältemittelflüssigkeitsleitung)
- 5a -: Pumpe
- 6 -: Rückführleitung (Kältemitteldampfleitung)
- 7a-d -: Stellplatz von 8
- 8a-d -: Transportbehälter
- 9a-d -: Verdampfer
- 10 -: Kontaktfläche an 9
- 11 -: Regeleinheit
- 12a - d -: Abströmventil
- 13a - d -: Einspritzventil
- 14 -: obere Deckplatte von 8
- 14' -: Kontaktfläche an 14
- 15 -: Wärmeträgerleitungen in 8
- 16 -: Fallrohr in 8
- 17 -: Rollen
- 18 -: Kocher-Adsorber A
- 19 -: Kocher-Adsorber B
- 20 -: Ventil für Desorption
- 21 -: Ventil für Adsorption
- 22 -: Vakuumpumpe
- 23 -: Kondensator
- 24 -: Kältemittelleitung für desorbierten Kältemitteldampf
- 25 -: Fremdgasleitung
- 26 -: Ventile für Fremdgase
- 27 -: Sammelbehälter
- 28 -: Sollwertgeber für 13
- 29 -: Positionsschalter vom Transportbehälter
- 30 -: Temperatursensor im Transportbehälter
- 31 -: Füllstandsgeber im Verdampfer
- 32 -: Drucksensor im Verdampfer
- 33 -: Meßwandler
- 34 -: Einspritzmengenregler
- 35 -: Abströmmnengenregler
- 36 -: Sollwertgeber für 12

## Patentansprüche

1. Anordnung zur Kühlung von Lebensmitteln, insbesondere in einem Flugzeug, die in üblicherweise bekannten Transportbehältern (8) gelagert werden und die Transportbehälter (8) innerhalb des Flugzeuges vorgegebene Stellplätze (7) einnehmen, vorzugsweise in mindestens einer Bordküche (3a bis 3e), wobei je einem Stellplatz (7) dem Transportbehälter (8) eine Wärmetauscheinrichtung (9) zugeordnet ist, die Wärmetauscheinrichtung (9) mit einem Kühlaggregat (4) verbunden ist und im Transportbehälter (8) in Wärmeträgerleitungen (15) ein Sekundärkreislauf zirkuliert, der an der Wärmetauscheinrichtung (9) Kühlexergie aufnimmt und die Kühlexergie an den Transportbehälter (8) wieder abgibt,
**dadurch gekennzeichnet, daß**
in den äußeren Wänden des Transportbehälters (8) Wärmeträgerleitungen (15) verlaufen, die Wärmetauscheinrichtung (9) und mindestens eine Wand des Transportbehälters (8), in der zumindest teilweise Wärmeträgerleitungen (15) verlaufen, mit Kontaktflächen (10, 14') versehen sind, die miteinander in Kontakt stehen, um eine Wärmeleitung zwischen der Wärmetauscheinrichtung (9) und den Wärmeträgerleitungen (15) zu gewährleisten.

2. Anordnung zur Kühlung von Lebensmitteln nach Anspruch 1,
**dadurch gekennzeichnet,**
daß der jeweiligen Wärmetauscheinrichtung (9) eine Regeleinrichtung (11) zugeordnet ist.

3. Anordnung zur Kühlung von Lebensmitteln nach einem der Ansprüche 1 oder 2 ,
**dadurch gekennzeichnet,**
daß die Wärmetauscheinrichtung (9) oberhalb des Transportbehälters (8) angeordnet ist.

4. Anordnung zur Kühlung von Lebensmitteln nach einem der Ansprüche 1 bis 3 ,
**dadurch gekennzeichnet,**
daß die jeweilige Kontaktfläche (10, 14') unterhalb der Wärmetauscheinrichtung (9) und an der oberen Deckplatte des Transportbehälters (14) angeordnet ist.

5. Anordnung zur Kühlung von Lebensmitteln nach einem der Ansprüche 1 bis 4,
**dadurch gekennzeichnet,**
daß die Kontaktflächen (10, 14') mittels einer Hub- und Senkvorrichtung mechanisch trennbar sind.

6. Anordnung zur Kühlung von Lebensmitteln nach einem der Ansprüche 1 bis 5,
**dadurch gekennzeichnet,**
daß die Wärmetauscheinrichtung (9) als Verdampfer ausgebildet ist.

7. Anordnung zur Kühlung von Lebensmitteln nach einem der Ansprüche 1 bis 6,
**dadurch gekennzeichnet,**
daß das Kühlaggregat (4) als eine Kompressionskaltdampfmaschine ausgebildet ist, wobei sie über eine als Kältemittelflüssigkeitsleitung (5) ausgebildete Zuführleitung und bedarfsweise eine Pumpe (5a) mit zumindest einem Verdampfer (9) verbunden ist und der Verdampfer (9) über eine als Kältemitteldampfleitung (6) ausgebildete Rückführleitung mit der Kompressionskaltdampfmaschine verbunden ist.

8. Anordnung zur Kühlung von Lebensmitteln nach einem der Ansprüche 1 bis 6,
**dadurch gekennzeichnet,**
daß das Kühlaggregat (4) als Sorptionseinrichtung (4) ausgebildet ist, wobei sie über eine als Kältemittelflüssigkeitsleitung (5) ausgebildete Zuführleitung und bedarfsweise eine Pumpe (5a) mit zumindest einem Verdampfer (9) verbunden ist und der Verdampfer (9) über eine als Kältemitteldampfleitung (6) ausgebildete Rückführleitung mit der Sorptionseinrichtung (4) verbunden ist.

9. Anordnung zur Kühlung von Lebensmitteln nach Anspruch 8,
**dadurch gekennzeichnet,**
daß die Sorptionseinrichtung (4) im wesentlichen aus mindestens zwei periodisch arbeitenden, parallel geschalteten Kocher-Adsorbern (18, 19), in denen ein Sorptionsmittel z.B. Zeolith, in einem quasikontinuierlichen Prozeß ein Kältemittel, z.B. Wasser, adsorbieren und desorbieren, einer bedarfsweise zuschaltbaren Vakuumpumpe (22), einem Kondensator (23) und einem Kältemittelsammelbehälter (27) aufgebaut ist.

10. Anordnung zur Kühlung von Lebensmitteln nach Anspruch 8,
**dadurch gekennzeichnet,**
daß die Sorptionseinrichtung (4) im wesentlichen aus einem Kocher und einem Absorber, die in Reihe geschaltet sind und die in einem kontinuierlichen Prozeß das Kältemittel absorbieren und desorbieren, einer bedarfsweise zuschaltbaren Pumpe, einem Kondensator und bedarfsweise einem Kältemittelsammelbehälter aufgebaut ist.

11. Anordnung zur Kühlung von Lebensmitteln nach Anspruch 2,
**dadurch gekennzeichnet,**
daß die Regeleinheit (11) als Mikroprozessor ausgebildet ist.

12. Anordnung zur Kühlung von Lebensmitteln nach Anspruch 2,
**dadurch gekennzeichnet,**
daß die Regeleinheit (11) an der jeweiligen Wärmetauscheinrichung (9a - d) in einem zentralen Prozeßrechner zusammengefaßt sind.

13. Anordnung zur Kühlung von Lebensmitteln nach einem der Ansprüche 2, 11 oder 12,
**dadurch gekennzeichnet,**
daß die Regeleinheit (11) an der jeweiligen Wärmetauscheinrichtung (9) im wesentlichen aus einem Einspritzmengenregler (34) und einem Abströmmengenregler (35) besteht, die jeweils mit einem Sollwertgeber (28, 36) verbunden sind und wobei der Einspritzmengenregler (34) über Meßwandler (33) mit einem Positionsschalter (29) zum Erfassen der Position des Transportbehälters (8) und wahlweise mit mindestens einem Temperatursensor (30) zum Erfassen der Temperatur des Kühlgutes innerhalb des Transportbehälters (8) und/oder mit einem Füllstandsgeber (31) im Verdampfer (9) verbunden ist und der Abströmmengenregler (35) über mindestens einen Meßwandler (33) mit dem Positionsschalter (29) und wahlweise mit mindestens einem Temperatursensor (30) im Transportbehälter (8) und/oder mit einem Drucksensor (32) im Verdampfer (9) verbunden ist.

14. Anordnung zur Kühlung von Lebensmitteln nach einem der Ansprüche 2, 11 oder 12,
**dadurch gekennzeichnet,**
daß die Regeleinheit (11) an der jeweiligen Wärmetauscheinrichtung (9) im wesentlichen aus einem Durchflußmengenregler besteht, der jeweils mit einem Sollwertgeber verbunden ist und wobei der Durchflußmengenregler über Meßwandler mit einem Positionsschalter zum Erfassen der Position des Transportbehälters und wahlweise mit mindestens einem Temperatursensor zum Erfassen der Temperatur des Kühlgutes innerhalb des Transportbehälters und/oder mit einem Temperatursensor an der Wärmetauscheinrichtung (9) verbunden ist.

15. Anordnung zur Kühlung von Lebensmitteln nach einem der Ansprüche 13 oder 14,
**dadurch gekennzeichnet, daß**
der Sollwertgeber (28, 36) in Abhängigkeit von der Kabinentemperatur programmierbar ist.

## Claims

1. Arrangement for cooling foodstuffs, particularly in an aircraft, which are stored in generally known transport containers (8) and the transport containers (8) adopt predetermined positioning locations (7) inside the aircraft, preferably in at least one galley (3a to 3e), wherein a heat-exchanging apparatus (9) is associated with the transport container (8) at a positioning location (7) in each case, the heat-exchanging apparatus (9) is connected to a cooling plant and there circulates, in heat carrier lines (15) in the transport container (8), a secondary circuit which takes on a cooling exergonic property at the heat-exchanging apparatus (9) and gives off the cooling exergonic property again to the transport container (8),
**characterised in that**
heat carrier lines (15) extend in the outer walls of the transport container (8), and the heat-exchanging apparatus (9) and at least one wall of the transport container (8), in which wall heat carrier lines (15) extend at least partially, are provided with contact faces (10, 14') which are in contact with one another in order to guarantee the conduction of heat between the heat-exchanging apparatus (9) and the heat carrier lines (15).

2. Arrangement for cooling foodstuffs, in accordance with claim 1,
**characterised in that**
a regulating apparatus (11) is associated with the particular heat-exchanging apparatus (9).

3. Arrangement for cooling foodstuffs, in accordance with one of claims 1 or 2,
**characterised in that**
the heat-exchanging apparatus (9) is disposed above the transport container (8).

4. Arrangement for cooling foodstuffs, in accordance with one of claims 1 to 3,
**characterised in that**
the particular contact face (10, 14') is disposed underneath the heat-exchanging apparatus (9) and on the upper cover plate of the transport container (14).

5. Arrangement for cooling foodstuffs, in accordance with one of claims 1 to 4,
**characterised in that**
the contact faces (10, 14') can be mechanically separated by means of a raising and lowering device.

6. Arrangement for cooling foodstuffs, in accordance with one of claims 1 to 5,
**characterised in that**
the heat-exchanging apparatus (9) is constructed as an evaporator.

7. Arrangement for cooling foodstuffs, in accordance with one of claims 1 to 6,
**characterised in that**
the cooling plant (4) is constructed as a compression-type cold vapour machine, the said machine being connected to at least one evaporator (9) via a feed line constructed as a refrigerant liquid line (5) and, if necessary, a pump (5a), and the evaporator (9) being connected to the compression-type cold vapour machine via a return line constructed as a refrigerant vapour line (6).

8. Arrangement for cooling foodstuffs, in accordance with one of claims 1 to 6,
**characterised in that**
the cooling plant (4) is constructed as a sorption-type apparatus (4), the said apparatus being connected to at least one evaporator (9) via a feed line constructed as a refrigerant liquid line (5) and, if necessary, a pump (5a), and the evaporator (9) being connected to the sorption-type apparatus (4) via a return line constructed as a refrigerant vapour line (6).

9. Arrangement for cooling foodstuffs, in accordance with claim 8,
**characterised in that**
the sorption-type apparatus (4) is essentially composed of at least two cooker/adsorbers (18, 19), which work periodically and are connected in parallel and in which a sorption agent, for example zeolite, adsorbs and desorbs a refrigerant, for example water, in a quasi-continuous process, a vacuum pump (22) which can be switched in if necessary, a condenser (23) and a refrigerant-collecting container (27).

10. Arrangement for cooling foodstuffs, in accordance with claim 8,
**characterised in that**
the sorption-type apparatus (4) is essentially composed of a cooker and an absorber, which are connected in series and which absorb and desorb the refrigerant in a continuous process, a pump which can be switched in if necessary, a condenser and, if necessary, a refrigerant-collecting container.

11. Arrangement for cooling foodstuffs, in accordance with claim 2,
**characterised in that**
the regulating unit (11) is constructed as a microprocessor.

12. Arrangement for cooling foodstuffs, in accordance with claim 2,
**characterised in that**
the regulating units (11) at the particular heat-exchanging apparatuses (9a - d) are combined in a central process computer.

13. Arrangement for cooling foodstuffs, in accordance with one of claims 2, 11 or 12,
**characterised in that**
the regulating unit (11) at the particular heat-exchanging apparatus (9) essentially consists of an injection quantity regulator (34) and a flow-off quantity regulator (35) which are, in each case, connected to a preset value transmitter (28, 36), the injection quantity regulator (34) being connected, via measuring transducers (33), to a position switch (29) for detecting the position of the transport container (8) and, selectively, to at least one temperature sensor (30) for detecting the temperature of the cooled goods inside the transport container (8) and/or to a filling level transmitter (31) in the evaporator (9), and the flow-off quantity regulator (35) being connected, via at least one measuring transducer (33), to the position switch (29) and, selectively, to at least one temperature sensor (30) in the transport container (8) and/or to a pressure sensor (32) in the evaporator (9).

14. Arrangement for cooling foodstuffs, in accordance with one of claims 2, 11 or 12,
**characterised in that**
the regulating unit (11) at the particular heat-exchanging apparatus (9) essentially consists of a through-flow quantity regulator which is connected, in each case, to a preset value transmitter, the through-flow quantity regulator being connected, via measuring transducers, to a position switch for detecting the position of the transport container and, selectively, to at least one temperature sensor for detecting the temperature of the cooled goods inside the transport container and/or to a temperature sensor at the heat-exchanging apparatus (9).

15. Arrangement for cooling foodstuffs, in accordance with one of claims 13 or 14,
**characterised in that**
the preset value transmitter (28, 36) can be programmed in dependence upon the cabin temperature.

## Revendications

1. Dispositif de refroidissement des aliments, plus particulièrement dans un avion, qui sont habituellement placés dans des conteneurs (8) connus et les conteneurs (8) occupant une place déterminée (7) à l'intérieur de l'avion, préférentiellement dans au moins une cuisine de bord (3a à 3e), un échangeur thermique (9) étant adjoint à chaque endroit (7) au conteneur (8), l'échangeur thermique (9) étant connecté à un dispositif de refroidissement (4) et un circuit secondaire circulant dans le conteneur (8) dans des conduites (15) à agent caloporteur, lequel circuit stocke l'énergie de refroidissement sur l'échangeur thermique et libère à nouveau celle-ci dans le conteneur (8),
**caractérisé en ce que,**
dans les parois externes du conteneur (8) circulent des conduites (15) à agent caloporteur, en ce que l'échangeur thermique (9) et au moins une paroi du conteneur (8), dans laquelle s'étendent au moins partiellement des conduites (15) à agent caloporteur, sont pourvus de surfaces de contact (10, 14') qui sont en contact l'une avec l'autre afin d'assurer un apport de chaleur entre l'échangeur thermique (9) et les conduites (15) à agent caloporteur.

2. Dispositif de refroidissement des aliments suivant la revendication 1,
**caractérisé en ce que,**
un dispositif de réglage (11) est adjoint à l'échangeur thermique (9).

3. Dispositif de refroidissement des aliments suivant la revendication 1 ou 2,
**caractérisé en ce que,**
l'échangeur thermique (9) est disposé au-dessus du conteneur (8).

4. Dispositif de refroidissement des aliments suivant l'une ou l'autre des revendications 1 à 3,
**caractérisé en ce que,**
la surface de contact (10, 14') est disposée sous l'échangeur thermique (9) et sur la plaque de recouvrement supérieure du conteneur (14).

5. Dispositif de refroidissement des aliments suivant l'une ou l'autre des revendications 1 à 4,
**caractérisé en ce que,**
les surfaces de contact (10, 14') peuvent être séparées mécaniquement au moyen d'un dispositif de soulèvement et d'abaissement.

6. Dispositif de refroidissement des aliments suivant l'une ou l'autre des revendications 1 à 5,
**caractérisé en ce que,**
l'échangeur thermique (9) est conçu comme un vaporisateur.

7. Dispositif de refroidissement des aliments suivant l'une ou l'autre des revendications 1 à 6,
**caractérisé en ce que,**
le dispositif de refroidissement (4) est conçu comme une machine frigorifique à compression, celui-ci étant connecté par l'intermédiaire d'une conduite d'amenée conçue comme une conduite (5) à fluide frigorigène et le cas échéant par une pompe (5a) à au moins un vaporisateur (9) et en ce que ledit vaporisateur (9) est relié par l'intermédiaire d'une conduite de retour conçue comme une conduite (6) à vapeur frigorigène à la machine frigorifique à compression.

8. Dispositif de refroidissement des aliments suivant l'une ou l'autre des revendications 1 à 6,
**caractérisé en ce que,**
le dispositif de refroidissement (4) est conçu comme un dispositif de sorption (4), celui-ci étant connecté par l'intermédiaire d'une conduite d'amenée conçue comme une conduite (5) à agent frigorigène et le cas échéant par une pompe (5a) à au moins un vaporisateur (9) et en ce que ledit vaporisateur (9) est relié par l'intermédiaire d'une conduite de retour conçue comme une conduite (6) à vapeur frigorifique au dispositif de sorption (4).

9. Dispositif de refroidissement des aliments suivant la revendication 8,
**caractérisé en ce que,**
le dispositif de sorption (4) est principalement composé d'au moins deux absorbeurs (18, 19) pour appareils à bouillir parallèles et fonctionnant périodiquement, qui absorbent et désorbent un agent de sorption, par exemple du zéolithe, dans un processus quasiment continu, un agent frigorigène, par exemple de l'eau, d'une pompe à vide (22) pouvant être commutée si besoin est, d'un condensateur (23) et d'un réservoir de stockage (27) de l'agent frigorigène.

10. Dispositif de refroidissement des aliments suivant la revendication 8,
**caractérisé en ce que,**
le dispositif de sorption (4) est principalement composé d'un appareil à bouillir et d'un absorbeur, qui sont commutés en rang et qui, dans un processus continu, absorbent et désorbent l'agent frigorigène, d'une pompe pouvant être commutée si besoin est, d'un condensateur et le cas échéant d'un réservoir de stockage de l'agent frigorigène.

11. Dispositif de refroidissement des aliments suivant la revendication 2,
**caractérisé en ce que,**
l'unité de réglage (11) est conçue comme un microprocesseur.

12. Dispositif de refroidissement des aliments suivant la revendication 2,
**caractérisé en ce que,**
l'unité de réglage (11) sur l'échangeur thermique (9 a - d) est contenue dans un ordinateur central.

13. Dispositif de refroidissement des aliments suivant l'une ou l'autre des revendications 2, 11 ou 12,
**caractérisé en ce que,**
l'unité de réglage (11) sur l'échangeur thermique (9) se compose principalement d'un régulateur de la quantité d'injection (34) et d'un régulateur de la quantité d'écoulement (35), qui sont connectés à un indicateur de la valeur théorique (28, 36) et le régulateur de la quantité d'injection (34) étant relié par l'intermédiaire d'un transformateur (33) à un commutateur de positionnement (29) destiné à enregistrer la position du conteneur (8) et facultativement à au moins un détecteur de température (30) destiné à enregistrer la température du produit réfrigéré à l'intérieur du conteneur (8) et/ou à un indicateur de niveau (31) dans le vaporisateur (9) et le régulateur de la quantité d'écoulement (35) étant connecté par l'intermédiaire d'au moins un transformateur (33) au commutateur de positionnement (29) et le cas échéant à au moins un détecteur de température (30) dans le conteneur (8) et/ou à un détecteur de pression (32) dans le vaporisateur (9).

14. Dispositif de refroidissement des aliments suivant l'une ou l'autre des revendications 2, 11 ou 12,
**caractérisé en ce que,**
l'unité de réglage (11) sur l'échangeur thermique (9) se compose principalement d'un régulateur de débit, qui est connecté à un indicateur de la valeur théorique et le régulateur de débit étant relié par l'intermédiaire d'un transformateur à un commutateur de positionnement destiné à enregistrer la position du conteneur et facultativement à au moins un détecteur de température destiné à enregistrer la température du produit réfrigéré à l'intérieur du conteneur et/ou à un détecteur de température sur l'échangeur thermique (9).

15. Dispositif de refroidissement des aliments suivant l'une ou l'autre des revendications 13 ou 14,
**caractérisé en ce que,**
l'indicateur de la valeur théorique (28, 36) peut être programmé en fonction de la température de la cabine.
